# EUROPEAN PATENT APPLICATION

(11) **EP 4 109 921 A1**
(43) Date of publication of application: **28.12.2022**
(21) Application number: 21829854.5
(22) Date of filing: 16.06.2021
(51) Int. Cl.: H04Q 11/00

(54) **ONU REGISTRATION METHOD AND APPARATUS, AND NETWORK DEVICE AND STORAGE MEDIUM**

(30) Priority: 23.06.2020 CN 202010580323
(71) Applicant: ZTE Corporation, Shenzhen, Guangdong 518057 (CN)
(72) Inventor: CHEN, Qiyuan, Shenzhen, Guangdong 518057 (CN)
(74) Representative: Nordmeyer, Philipp Werner
(86) International application number: PCT/CN2021/100442
(87) International publication number: WO 2021/259113

(57) **Abstract**

An ONU registration method and apparatus, and a network device and a storage medium. The method comprises: when it is determined that at least one ONU is online, receiving notification information reported by the online ONU; and registering the ONU into a corresponding network slice according to parameter information carried in the notification information and a recognition rule corresponding to a pre-established network slice.

## Description

### CROSS-REFERENCE TO RELATED APPLICATION

This application is filed on the basis of Chinese patent application No. 202010580323.8 filed June 23, 2020, and claims priority to the Chinese patent application, the entire contents of which are incorporated herein by reference.

### TECHNICAL FIELD

Embodiments of the present disclosure relate to, but not limited to, the field of computer technologies, and more particularly to, but not limited to, a method and apparatus for registering an ONU, a network device, and a storage medium.

### BACKGROUND

With the rapid development of network slicing technology and to improve the utilization rate of telecommunications devices, reduce costs and increase profits, most operators widely use Network Slicing (NS) technology to divide a physical device into many logical devices for independent operation by multiple operators. In telecommunications networks, network slicing is an innovative technology for logically dividing a physical network, that is, virtualizing multiple logical devices on one physical telecommunications device, thereby reducing repeated network construction and realizing service aggregation, security isolation, and differentiated services. In optical access networks, the network slicing technology is mainly applied to Optical Line Terminals (OLTs), to virtualize one physical OLT into multiple sliced OLTs to realize the sharing of key resources such as access equipment rooms, OLTs, and ports, thereby meeting the needs of different business types and differentiated services and independent operation and maintenance management for different users. However, in some cases in this field, to bring a connected Optical Network Unit (ONU) online during registration of a user of a certain operator, manual operation is required to add and register the ONU, which will bring some problems, such as that the complex manual operations and frequent operations by the maintenance personnel easily lead to errors. In addition, manual operation inevitably involves human participation, which consumes manpower and is inefficient and prone to errors due to improper manual operation.

### SUMMARY

Embodiments of the present disclosure provide a method and apparatus for registering an ONU, a network device, and a storage medium.

According to an embodiment of the present disclosure, a method for registering an ONU is provided. The method includes: receiving, in response to determining that at least one ONU goes online, notification information reported by the online ONU; and registering the ONU in a pre-established corresponding network slice according to parameter information carried in the notification information and an identification rule corresponding to the pre-established network slice.

According to an embodiment of the present disclosure, an apparatus for registering an ONU is further provided. The apparatus includes: an information receiving module, configured for receiving, in response to determining that at least one ONU goes online, notification information reported by the online ONU; and an addition module, configured for registering the ONU in a pre-established corresponding network slice according to parameter information carried in the notification information and an identification rule corresponding to the pre-established network slice.

According to an embodiment of the present disclosure, a network device is further provided. The network device includes a processor, a memory, and a communication bus, where the communication bus is configured for implementing connection and communication between the processor and the memory; and the processor is configured for executing one or more computer programs stored in the memory to implement the above method for registering an ONU.

According to an embodiment of the present disclosure, a computer-readable storage medium is further provided, storing one or more programs which, when executed by one or more processors, cause the one or more processors to implement the above method for registering an ONU.

Additional features and advantages of the present disclosure will be set forth in the description which follows, and in part will be obvious from the description, or may be learned by the practice of the present disclosure.

### BRIEF DESCRIPTION OF DRAWINGS

FIG. 1 is a flowchart of a method for registering an ONU according to Embodiment One of the present disclosure;
FIG. 2 is a detailed flowchart of a method for registering an ONU according to Embodiment Two of the present disclosure;
FIG. 3 is a schematic structural diagram of an apparatus for registering an ONU according to Embodiment Three of the present disclosure; and
FIG. 4 is a schematic structural diagram of a network device according to Embodiment Four of the present disclosure.

### DETAILED DESCRIPTION

Objects, technical schemes and advantages of the present disclosure will be clearer from a detailed description of embodiments of the present disclosure in conjunction with the drawings. It should be understood that the specific embodiments described herein are merely used for illustrating the present disclosure, and are not intended to limit the present disclosure.

### Embodiment One

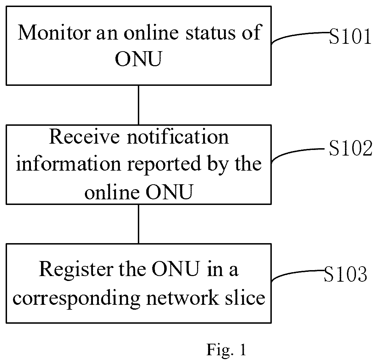

According to an embodiment of the present disclosure, a method for registering an ONU is provided. Referring to FIG. 1, the method includes following steps S101 to S103.

At S101, an online status of at least one ONU is monitored.

At S102, when a determination is made that at least one ONU goes online, notification information reported by the online ONU is received.

At S103, the ONU is registered in a pre-established corresponding network slice according to parameter information carried in the notification information and an identification rule corresponding to the pre-established network slice.

In optical access networks, the network slicing technology is mainly applied to OLTs, to virtualize one physical OLT into multiple sliced OLTs to realize the sharing of key resources such as access equipment rooms, OLTs, and ports, thereby meeting the needs of different business types and differentiated services and independent operation and maintenance management for different users. In terms of slice sharing granularity, there are Passive Optical Network (PON) board sharing, PON port sharing, etc., to achieve sharing of multiple services and multiple operator resources.

During the ONU access process, the ONU is registered according to information such as the network slice to which the ONU belongs or an operator to which the ONU belongs and a PON port of a connected PON board. In the embodiments of the present disclosure, during management of the ONU, an Element Management System (EMS) can automatically perform the process of registering and adding the ONU.

At S101, monitoring the online status of the at least one ONU means that the system can monitor in real time whether there is a new ONU attempting to go online. The monitoring process may be real-time uninterrupted monitoring, periodic monitoring at certain time intervals, or monitoring according to an indication of a triggering operation upon reception of the triggering operation.

At S102, when an ONU goes online, the ONU reports notification information. The type of the notification information may be TRAP information, carrying parameter information related to the ONU. The EMS can determine a network slice corresponding to the ONU according to the parameter information.

In the TRAP information, one or more of the following may be bound:
port: indicating that the ONU is connected to a specific port of a specific board;
ONU Internet Protocol (IP): indicating an IP address of the ONU;
ONU type: indicating the specific type of the ONU;
ONU Media Access Control (MAC): indicating a MAC address of the ONU;
ONU Serial Number (SN): indicating a unique SN of the ONU;
ONU password: indicating an authentication password of the ONU; and
ONU version: indicating a software version of the ONU.

At S103, after receiving the notification information, the network slice corresponding to the ONU, i.e., the network slice with which the ONU is to be registered, can be determined according to the parameter information bound in the notification information and the preset network slice and identification rule. For the method of presetting the network slices, reference may be made to the following description.

Prior to monitoring the online status of the ONU, the method further includes:
maintaining a slice resource template; and
creating the network slices on a physical OLT according to the slice resource template, and assigning each of the network slices with a unique identity (ID). The slice resource template may be set according to the division of network slices. One slice resource template is set for each network slice. In the slice resource template, a network parameter of the network slice is set. The network parameter may be set according to the division of network slices. That is to say, in the slice resource template, at least one of the following parameters is configured for respective network slices:
   Virtual Local Area Network (VLAN) number: a total number of VLANs used, where the number of VLANs used by this slice cannot exceed the total number of VLANs, and the same applies to the following parameters;
   number of MAC addresses learned: indicating a total number of MAC addresses learned;
   Virtual Port (VPORT) number: indicating a total number of VPORTs used for a Gigabit-Capable Passive Optical Networks (GPON) service;
   ONU number: indicating a total number of ONUs managed;
   Point-to-Point Protocol Over Ethernet (PPPoE) number: indicating a total number of PPPoEs used for network access;
   Dynamic Host Configuration Protocol (DHCP) number: indicating a total number of DHCPs used for Internet Protocol version 4 (IPv4) and/or Internet Protocol Version 6 (IPv6).

In addition, some other parameters may also be set, including parameters related to an Internet Protocol Television (IPTV) service and Quality of Service (QoS):
Internet Group Management Protocol (IGMP) multicast group number: indicating a total number of IGMP multicast groups used for the IPTV service;
Multicast Listener Discover (MLD) multicast group number: indicating a total number of IPv6 multicast groups used for the IPTV service;
Access Control Lists (ACL) rule number: indicating a total number of ACL rules created;
Code of Service to Code of Service (COS2COS) mapping template number: indicating a total number of COS2COS mapping templates for QoS;
Differentiated Services Code Point to Differentiated Services Code Point (DSCP2DSCP) mapping template number: indicating a total number of DSCP2DSCP mapping templates for QoS;
Differentiated Services Code Point to Code of Service (DSCP2COS) mapping template number: indicating a total number of DSCP2COS mapping templates for QoS; and
Peak Information Rate (PIR): indicating a peak information rate for QoS, i.e., a maximum information rate, in kpbs.

Then, the network slices are created according to the slice resource template. When the network slices are created, each network slice has an ID that is different from those of other network slices.

In some embodiments, the maintaining a slice resource template may include: creating a slice resource template; or modifying an existing slice resource template. For a previously existing slice resource template, the slice resource template may be used directly or modified according to a current need. Alternatively, for a previously non-existent slice resource template, a new slice resource template may be directly created and configured, i.e., configured with corresponding parameters, which can be used for the current need or for future network management. The slice resource template is a template configured for creation or configuration of slice resources. The slice resource template may include a plurality of parameters related to the creation of network slices.

In some embodiments, the creating the network slices on a physical OLT according to the slice resource template may include:
allocating slice boards and port resources and configuring port modes for the network slices.

In some embodiments, after creating the network slices on a physical OLT, the method further includes:
creating the identification rules according to the network slices and an identification rule type parameter. The identification rule indicates how to determine the network slice to which the ONU belongs based on the TRAP information reported by the ONU. In the embodiments of the present disclosure, the identification rule is determined based on the network slices obtained through division and the identification rule type parameter. The identification rule type parameter may include at least one of:
ONU MAC address information, ONU serial number information, ONU authentication password, ONU logical identification information, pre-shared key (PSK), or registration identifier (RID) of ONU. The ONU MAC address information may include:
a MAC address: i.e., the MAC address of the ONU;
a MAC address range: indicating a starting MAC address and an ending MAC address of the ONU; and
a MAC address regular expression: indicating a regular expression rule that the MAC address of the ONU matches.

The ONU serial number information may include:
an SN: the serial number of the ONU;
an SN regular expression: indicating a regular expression rule that the serial number of the ONU matches;
an SN and a password: indicating a combination of the serial number and the password of the ONU; and
an SN and an RID: indicating a combination of the serial number and the registration identifier (RID) of the ONU.

The ONU logical identification information may include:
a Logic ID of ONU (LOID): a logical identifier of the ONU; and
an LOID and a password: indicating a combination of the logical identifier and the password of the ONU.

The identification rule may be a rule obtained based on one of or a combination of at least two of the above identification rule type parameters. For example, the identification rule type may be a combination of the SN and the password, a combination of the SN and the RID, or a combination of the LOID and the password. The identification rule is at least embodied as a correspondence between the identification rule type and the network slice. For example, if the SN and the password of the ONU are identified as matching with this rule type, it indicates that the ONU belongs to the corresponding slice. The same may be true for other parameters.

In addition, in some embodiments, prior to monitoring the online status of the at least one ONU, the method further includes:
determining that a PON port corresponding to the network slice is in a port sharing mode. For a PON, if a plurality of network slices are allowed to manage their corresponding ONUs through a port of the PON, or if a port of the PON is allocated to a plurality of network slices, the PON is considered to be in the port sharing mode. In this mode, because one port of the PON corresponds to at least two network slices, and one network slice can register and manage a plurality of ONUs, it may to adopt the method for registering an ONU in the embodiments of the present disclosure to achieve the fast and automatic registration of ONUs that go online.

According to the method for registering an ONU in the embodiments of the present disclosure, an online status of at least one ONU is monitored; when a determination is made that at least one ONU goes online, notification information reported by the online ONU is received; and the ONU is registered in a corresponding network slice according to parameter information carried in the notification information and an identification rule corresponding to the pre-established network slice. In some implementation processes, automatic identification and automatic registration of the ONU can be performed according to the network slice and the identification rule, so that operations related to the ONU can be completed without human participation, thereby improving the operational efficiency and fault tolerance.

### Embodiment Two

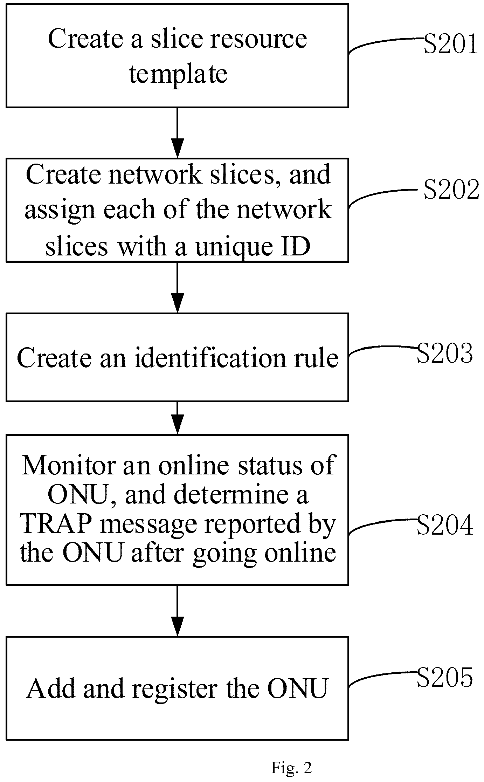

According to an embodiment of the present disclosure, a method for registering an ONU is provided. Referring to FIG. 2, the method includes following steps S201 to S205.

At S201, a slice resource template is created. For example, two resource templates Resource_A and Resource_B are created respectively. The slice resource template may include at least one of the following basic parameters:
VLAN number: a total number of VLANs used, where the number of VLANs used by this slice cannot exceed the total number of VLANs;
number of MAC addresses learned: indicating a total number of MAC addresses learned;
VPORT number: indicating a total number of VPORTs used for a GPON service;
ONU number: indicating a total number of ONUs managed;
PPPoE number: indicating a total number of PPPoEs used for network access; and
DHCPv4 number: indicating a total number of DHCPs used for IPv4;

The slice resource template may also include other parameters, including parameters related to an IPTV service and QoS:
DHCPv6 number: indicating a total number of DHCPs used for IPv6;
IGMP multicast group number: indicating a total number of IGMP multicast groups used for the IPTV service;
MLD multicast group number: indicating a total number of IPv6 multicast groups used for the IPTV service;
ACL rule number: indicating a total number of ACL rules created;
COS2COS mapping template number: indicating a total number of COS2COS mapping templates for QoS;
DSCP2DSCP mapping template number: indicating a total number of DSCP2DSCP mapping templates for QoS;
DSCP2COS mapping template number: indicating a total number of DSCP2COS mapping templates for QoS; and
PIR (kbps): indicating a peak information rate for QoS, i.e., a maximum information rate.

At S202, network slices are created, and each of the network slices is assigned a unique ID. For example, two slices are created. IDs of the two slices are Slice_ID_A and Slice_ID_B respectively. Resources are allocated to the slices Slice_ID_A and Slice_ID_B respectively based on slice resource templates Resource_A and Resource_B. Parameters of the slice resource templates have been described above, which mainly include parameters: VLAN number, number of MAC addresses learned, VPORT number, ONU number, PPPoE number, and DHCPv4 number, to indicate a maximum number of VLANs used by this slice, a maximum number of MAC addresses, and so on. Board resources are allocated to the slices Slice_ID_A and Slice_ID_B. To be specific, resources of a GPON board A are allocated to the slices Slice_ID_A and Slice_ID_B at the same time. Then, port resources are allocated to the slices Slice_ID_A and Slice_ID_B. To be specific, a port B-1 of an upstream board B is allocated to the slices Slice_ID_A and Slice_ID_B. The allocation mode of the port B-1 is a shared mode, indicating that both the two slices use the port B-1 of the upstream board B as an upstream port, for connecting to and communicating with an upper-layer network. A port A-2 of a GPON board A is also allocated to the slices Slice_ID_A and Slice_ID_B. The allocation mode of the port A-2 is also the shared mode, indicating that both the two slices Slice_ID_A and Slice_ID_B manage respective ONUs through the port A-2 of the GPON board. In other words, the port A-2 of the GPON board is allocated to a plurality of slices, and this port is in the port sharing mode.

At S203, identification rules are created based on the above network slices Slice_ID_A and Slice_ID_B and an identification rule type parameter. The identification rule type parameter includes at least one of:
a MAC address: the MAC address of the ONU;
an MAC address range: indicating a starting MAC address and an ending MAC address of the ONU;
a MAC address regular expression: indicating a regular expression rule that the MAC address of the ONU matches;
an SN: the serial number of the ONU;
an SN regular expression: indicating a regular expression rule that the serial number of the ONU matches;
an SN and a password: indicating a combination of the serial number and the password of the ONU;
an SN and an RID: indicating a combination of the serial number and the registration identifier of the ONU;
a password: indicating an authentication password of the ONU;
an LOID: a logical identifier of the ONU;
an LOID and a password: indicating a combination of the logical identifier and the password of the ONU;
a PSK: a pre-shared key; or
an RID: a registration identifier of the ONU.

In addition, the identification rule type may also be a combination of the above parameters, such as a combination of the SN and the password, a combination of the SN and the RID, or a combination of the LOID and the password. If the SN and the password of the ONU are identified as matching with this rule type, it indicates that the ONU belongs to the corresponding slice. The same holds true for other parameters. In addition, the identification rule type may also be a regular expression, such as a MAC address regular expression and an SN regular expression. For example, if the MAC address of the ONU matches with the MAC address regular expression, the ONU belongs to the slice corresponding to this rule type. If the SN of the ONU matches with the SN regular expression, the ONU belongs to the slice corresponding to this rule type.

The following table lists additional implementation methods of identification rules:

**Table 1**

| Rule ID | Slice ID | Rule type | Type value |
|---|---|---|---|
| Ruler_ID_A | Slice_ID_A | MAC address | MAC_A |
| Ruler_ID_B | Slice_ID_B | SN | SN_B |
| Ruler_ID_C | Slice_ID_A | SN+password | SN:SN_A Password: PASS A |
| Ruler_ID_D | Slice_ID_B | MAC address regular expression | REGEX_MAC_A |

The above four rules have been created. If a MAC address of an ONU is MAC_A, the MAC address is matched against entries in the above rule table. First, two entries having a rule type of MAC address or MAC regular expression are found. Then a determination is made as to whether the type values corresponding to the two entries match with the MAC address value MAC_A. To be specific, if the rule type is MAC address, a determination is made as to whether the MAC address value of the ONU is the same as MAC_A. If yes, a match is found, indicating that the ONU belongs to the slice Slice_ID_A. If not, the MAC address value of the ONU is further matched against the other entry having a rule type of MAC address regular expression, to determine whether the MAC address value MAC A of the ONU matches with the MAC address regular expression REGEX_MAC_A. If yes, it indicates that the ONU belongs to the slice Slice_ID_B.

At S204, an online status of at least one ONU is monitored, and a TRAP message reported by the ONU after going online is determined. For example, two ONUs connect to the port A-2 of the GPON board A of the OLT and go online. It is assumed that a MAC address of one ONU (named ONU_A) is MAC_A, and an SN of the other ONU (named ONU_B) is SN_B. In this case, the OLT generates two TRAP messages for the ONUs and reports the two TRAP messages to the EMS. The two TRAP messages are detected and contents of the TRAP messages are parsed. The content bound in the TRAP may mainly include at least one of the following parameters:
port: indicating that the ONU is connected to a specific port of a specific board;
ONU IP: indicating an IP address of the ONU;
ONU type: indicating the specific type of the ONU;
ONU MAC: indicating an IP address of the ONU;
ONU SN: indicating a unique SN of the ONU;
ONU password: indicating an authentication password of the ONU; or
ONU version: indicating a software version of the ONU.

The port A-2 is parsed out from the TRAP messages of ONU_A and ONU_B, and a determination is made as to whether the port A-2 is in an allocation mode of being shared by the slices Slice_ID_A and Slice_ID_B. If yes, the content of the first TRAP message of ONU_A is further identified according to the ONU type, ONU MAC address, ONU SN, ONU password, ONU version, ONU LOID and other information of the ONU obtained by parsing: the MAC address is MAC_A. Then, the MAC address MAC_A is matched against all the identification rules, finding that the MAC address MAC A matches with the identification rule having an ID of Ruler_ID_A, which corresponds to the slice Slice_ID_A. Therefore, ONU_A belongs to the slice Slice_ID_A. The content of the second TRAP message of ONU_B is also identified according to the above information of the ONU obtained by parsing: the SN is SN_B. Then, the SN SN_B is matched against all the identification rules, finding that the SN SN_B matches with the identification rule having an ID of Ruler_ID_B, which corresponds to the slice Slice_ID_B. Therefore, ONU_B belongs to the slice Slice_ID_B.

At S205, ONU_A and ONU_B are added and registered. To be specific, according to the information of ONU_A including the MAC address, SN, and version number, a command is sent to an IP address of the slice Slice_ID_A to add and register the ONU. According to the information of ONU_B, a command is sent to an IP address of the slice Slice_ID_B to add and register the ONU. The information of ONU_A and ONU B registered at the same time is saved to a database by the EMS. To be specific, the IP address of the slice Slice_ID_A where ONU_A is located, a location of the board A, the port A-2, a name of the ONU_A, the MAC address MAC_A, the SN, and the version information of ONU_A, etc., are saved to the database. The IP address of the slice Slice_ID_B where ONU_B is located, the location of the board A, the port A-2, a name of ONU_B, the MAC address, the SN SN_B, and the version information of ONU_B, etc., are saved to the database.

### Embodiment Three

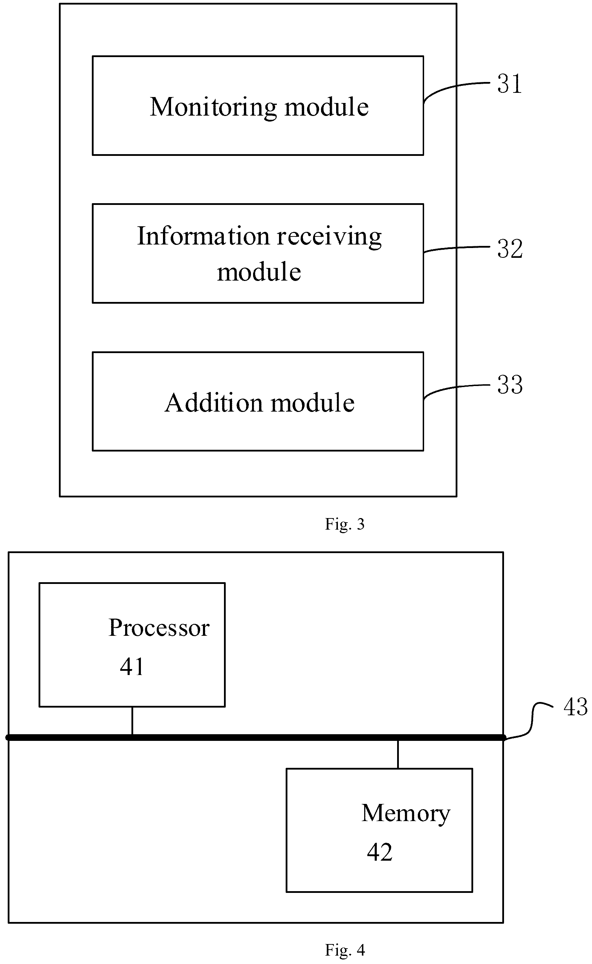

According to an embodiment of the present disclosure, an apparatus for registering an ONU is provided. Referring to FIG. 3, the apparatus includes: a monitoring module 31, an information receiving module 32 and an addition module 33.

The monitoring module 31 is configured for monitoring an online status of at least one ONU.

The information receiving module 32 is configured for receiving, when a determination is made that at least one ONU goes online, notification information reported by the online ONU.

The addition module 33 is configured for registering the ONU in a corresponding network slice according to parameter information carried in the notification information and an identification rule corresponding to the pre-established network slice.

In optical access networks, the network slicing technology is mainly applied to OLTs, to virtualize one physical OLT into multiple sliced OLTs to realize the sharing of key resources such as access equipment rooms, OLTs, and ports, thereby meeting the needs of different business types and differentiated services and independent operation and maintenance management for different users. In terms of slice sharing granularity, there are PON board sharing, PON port sharing, etc., to achieve sharing of multiple services and multiple operator resources.

During the ONU access process, the ONU is registered according to information such as the network slice to which the ONU belongs or an operator to which the ONU belongs and a PON port of a connected PON board. In the embodiments of the present disclosure, during management of the ONU, an Element Management System (EMS) can automatically perform the process of registering and adding the ONU.

Monitoring the online status of the at least one ONU means that the system can monitor in real time whether there is a new ONU attempting to go online. The monitoring process may be real-time uninterrupted monitoring, periodic monitoring at certain time intervals, or monitoring according to an indication of a triggering operation upon reception of the triggering operation.

When an ONU goes online, the ONU reports notification information. The type of the notification information may be TRAP information, carrying parameter information related to the ONU. The EMS can determine a network slice corresponding to the ONU according to the parameter information.

In the TRAP information, one or more of the following may be bound:
port: indicating that the ONU is connected to a specific port of a specific board;
ONU IP: indicating an IP address of the ONU;
ONU type: indicating the specific type of the ONU;
ONU MAC: indicating a MAC address of the ONU;
ONU SN: indicating a unique SN of the ONU;
ONU password: indicating an authentication password of the ONU; and
ONU version: indicating a software version of the ONU.

After receiving the notification information, the network slice corresponding to the ONU, i.e., the network slice with which the ONU is to be registered, can be determined according to the parameter information bound in the notification information and the preset network slice and identification rule. For the method of presetting the network slices, reference may be made to the following description.

Prior to monitoring the online status of the at least one ONU, the method further includes:
maintaining a slice resource template; and
creating the network slices on a physical OLT according to the slice resource template, and assigning each of the network slices with a unique identity (ID). The slice resource template may be set according to the division of network slices. One slice resource template is set for each network slice. In the slice resource template, a network parameter of the network slice is set. The network parameter may be set according to the division of network slices. That is to say, in the slice resource template, at least one of following parameters is configured for respective network slices:
VLAN number: a total number of VLANs used, where the number of VLANs used by this slice cannot exceed the total number of VLANs, and the same applies to the following parameters;
number of MAC addresses learned: indicating a total number of MAC addresses learned;
VPORT number: indicating a total number of VPORTs used for a GPON service;
ONU number: indicating a total number of ONUs managed;
PPPoE number: indicating a total number of PPPoEs used for network access; and
DHCP number: indicating a total number of DHCPs used for IPv4 and/or IPv6.

In addition, some other parameters may also be set, including parameters related to an IPTV service and QoS:
IGMP multicast group number: indicating a total number of IGMP multicast groups used for the IPTV service;
MLD multicast group number: indicating a total number of IPv6 multicast groups used for the IPTV service;
ACL rule number: indicating a total number of ACL rules created;
COS2COS mapping template number: indicating a total number of COS2COS mapping templates for QoS;
DSCP2DSCP mapping template number: indicating a total number of DSCP2DSCP mapping templates for QoS;
DSCP2COS mapping template number: indicating a total number of DSCP2COS mapping templates for QoS; and
PIR (kbps): indicating a peak information rate for QoS, i.e., a maximum information rate.

Then, the network slices are created according to the slice resource template. When the network slices are created, each network slice has an ID that is different from those of other network slices.

In some embodiments, the maintaining a slice resource template may include: creating a slice resource template; or modifying an existing slice resource template. For a previously existing slice resource template, the slice resource template may be used directly or modified according to a current need. Alternatively, for a previously non-existent slice resource template, a new slice resource template may be directly created and configured, i.e., configured with corresponding parameters, which can be used for the current need or for future network management.

In some embodiments, the creating the network slices on a physical OLT according to the slice resource template may include:
allocating slice boards and port resources and configuring port modes for the network slices.

In some embodiments, after creating the network slices on a physical OLT, the method further includes:
creating the identification rules according to the network slices and an identification rule type parameter. The identification rule indicates how to determine the network slice to which the ONU belongs based on the TRAP information reported by the ONU. In the embodiments of the present disclosure, the identification rule is determined based on the network slices obtained through division and the identification rule type parameter. The identification rule type parameter may include at least one of:
ONU MAC address information, ONU serial number information, ONU authentication password, ONU logical identification information, pre-shared key (PSK), or registration identifier (RID) of ONU. The ONU MAC address information may include:
a MAC address: the MAC address of the ONU;
a MAC address range: indicating a starting MAC address and an ending MAC address of the ONU; and
a MAC address regular expression: indicating a regular expression rule that the MAC address of the ONU matches.

The ONU serial number information may include:
an SN: the serial number of the ONU;
an SN regular expression: indicating a regular expression rule that the serial number of the ONU matches;
an SN and a password: indicating a combination of the serial number and the password of the ONU; and
an SN and an RID: indicating a combination of the serial number and the registration identifier (RID) of the ONU.

The ONU logical identification information may include:
an LOID: a logical identifier of the ONU; and
an LOID and a password: indicating a combination of the logical identifier and the password of the ONU.

The identification rule may be obtained based on one of or a combination of at least two of the above identification rule type parameters, for example, based on a combination of the SN and the password, a combination of the SN and the RID, or a combination of the LOID and the password. If the SN and the password of the ONU are identified as matching with this rule type, it indicates that the ONU belongs to the corresponding slice. The same may be true for other parameters.

According to the apparatus for registering an ONU in the embodiments of the present disclosure, an online status of at least one ONU is monitored; when a determination is made that at least one ONU goes online, TRAP information reported by the online ONU is received; and the ONU is registered in a corresponding network slice according to pre-established network slices and identification rules corresponding to the network slices. In some implementation processes, automatic identification and automatic registration of the ONU can be performed according to the network slice and the identification rule, so that operations related to the ONU can be completed without human participation, thereby improving the operational efficiency and fault tolerance.

### Embodiment Four

According to an embodiment of the present disclosure, a network device is further provided. Referring to FIG. 4, the network device includes a processor 41, a memory 42, and a communication bus 43.

The communication bus 43 is configured for implementing connection and communication between the processor 41 and the memory 42.

The processor 41 is configured for executing one or more computer programs stored in the memory 42 to implement the method for registering an ONU in the above embodiments, which will not be repeated here.

According to an embodiment of the present disclosure, a computer-readable storage medium is further provided. The computer-readable storage medium includes volatile or nonvolatile, removable or non-removable media implemented in any method or technology for storage of information (such as computer readable instructions, data structures, computer program modules, or other data). The computer-readable storage medium includes, but is not limited to, a random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette, a magnetic tape, a magnetic disk storage or other magnetic storage device, or any other medium which can be used to store the desired information and which can be accessed by a computer.

The computer-readable storage medium in the embodiments of the present disclosure may be configured for storing one or more computer programs which, when executed by one or more processors, cause the one or more processors to implement the above method for registering an ONU in the above embodiments.

According to an embodiment of the present disclosure, a computer program (or computer software) is further provided. The computer program may be distributed on a computer-readable medium and executed by a computing device to implement the above method for registering an ONU in the above embodiments. In some cases, at least one of the steps shown or described may be performed in an order different from that described in the above embodiments.

According to an embodiment of the present disclosure, a computer program product is further provided, including a computer-readable device storing a computer program described above. In an embodiment of the present disclosure, the computer-readable device may include a computer-readable storage medium described above.

According to the method and apparatus for registering an ONU, the network device, and the storage medium provided in the embodiments of the present disclosure, when a determination is made that at least one ONU goes online, notification information reported by the online ONU is received; and the ONU is registered in a corresponding network slice according to parameter information carried in the notification information and an identification rule corresponding to the pre-established network slice. In some implementation processes, automatic identification and automatic registration of the ONU that goes online can be performed according to the parameter information carried in the notification information reported by the ONU, the network slice, and the identification rule, so that operations related to the ONU can be completed without human participation, thereby improving the operational efficiency and fault tolerance.

Therefore, those having ordinary skills in the art can understand that all or some of the steps in the methods disclosed above and the functional modules/units in the system and the apparatus can be implemented as software (which may be implemented by a computer program code executable by a computing device), firmware, hardware, and appropriate combinations thereof. In a hardware implementation, the division of the functional modules/units mentioned in the above description does not necessarily correspond to the division of physical components. For example, one physical component may have multiple functions, or one function or step may be jointly executed by several physical components. Some or all physical components may be implemented as software executed by a processor, such as a central processing unit, a digital signal processor, or a microprocessor, or as hardware, or as an integrated circuit, such as an application-specific integrated circuit.

In addition, as is known to those having ordinary skills in the art, the communication medium typically includes computer-readable instructions, data structures, computer program modules, or other data in a modulated data signal such as a carrier or other transport mechanism, and may include any information transmission medium. Therefore, the present disclosure is not limited to any particular combination of hardware and software.

The foregoing is a further detailed description of the present disclosure in conjunction with specific embodiments, and it should not be considered that the specific implementation of the present disclosure is limited thereto. Some simple deductions or replacements can be made by those having ordinary skills in the art to which the present disclosure pertains without departing from the protection scope of the present disclosure, which are all regarded as falling within the protection scope of the present disclosure.

## Claims

1. A method for registering an Optical Network Unit (ONU), comprising:
receiving, in response to determining that at least one ONU goes online, notification information reported by the online ONU; and
registering the ONU in a pre-established network slice according to parameter information carried in the notification information and an identification rule corresponding to the pre-established network slice.

2. The method of claim 1, wherein prior to monitoring an online status of at least one ONU, the method further comprises:
maintaining a slice resource template; and
creating the network slices on a physical Optical Line Terminal (OLT) according to the slice resource template, and assigning each of the network slices with a unique identity (ID).

3. The method of claim 2, wherein maintaining a slice resource template comprises: creating a slice resource template; or modifying an existing slice resource template.

4. The method of claim 2, wherein creating the network slices on a physical OLT according to the slice resource template comprises:
allocating slice boards and port resources and configuring port modes for the network slices.

5. The method of claim 2, wherein in the slice resource template, at least one of following parameters is configured for respective network slices:
Virtual Local Area Network (VLAN) number, number of Media Access Control (MAC) addresses learned, virtual port (VPORT) number, ONU number, Point-to-Point Protocol Over Ethernet (PPPoE) number, or Dynamic Host Configuration Protocol (DHCP) number.

6. The method of any one of claims 2-5, wherein after creating the network slices on a physical OLT, the method further comprises:
creating the identification rules corresponding to the network slices according to the network slices and an identification rule type parameter.

7. The method of claim 6, wherein the identification rule type parameter comprises at least one of:
ONU MAC address information, ONU serial number information, ONU authentication password, ONU logical identification information, pre-shared key, or registration identifier (RID) of ONU.

8. The method of any one of claims 1-5, wherein prior to monitoring an online status of at least one ONU, the method further comprises:
determining that a Passive Optical Network (PON) port corresponding to the network slice is in a port sharing mode.

9. An apparatus for registering an ONU, comprising:
an information receiving module, configured for receiving, in response to determining that at least one ONU goes online, notification information reported by the online ONU; and
an addition module, configured for registering the ONU in a pre-established network slice according to parameter information carried in the notification information and an identification rule corresponding to the pre-established network slice.

10. A network device, comprising a processor, a memory, and a communication bus,
wherein the communication bus is configured for implementing connection and communication between the processor and the memory; and
the processor is configured for executing one or more computer programs stored in the memory to carry out the method of any one of claims 1 to 8.

11. A computer-readable storage medium, storing one or more computer programs which, when executed by one or more processors, cause the one or more processors to carry out the method of any one of claims 1 to 8.
